# EUROPEAN PATENT APPLICATION

(11) **EP 3 078 347 A1**
(43) Date of publication of application: **12.10.2016**
(21) Application number: 16164718.5
(22) Date of filing: 11.04.2016
(51) Int. Cl.: A61C 15/04, A61C 3/06, A61C 3/12

(54) **DENTAL STRIP HOLDER**

(30) Priority: 09.04.2015 US 201562145254 P
(71) Applicant: Ackel, Gilbert, Cote-St-Luc, Quebec H4V 2G8 (CA)
(72) Inventor: ACKEL, Gilbert, Côte-St-Luc, Québec H4V 2G8 (CA)
(74) Representative: Casalonga

(57) **Abstract**

A dental strip holder (10) for supporting a dental strip (12) which can be used to to polish and remove the stains from teeth is disclosed. The dental strip holder (10) includes a handle (22), and a pair of prongs (28) extending from the handle (22), each prong (28) comprising one or more connectors (32, 33) for removably securing each end of the dental strip (12) to the prong (28) to support the dental strip (12) between the pair of prongs (28). Advantageously, the dental strip (12) can be easily removed and attached from the dental strip holder (10).

## Description

### FIELD OF THE INVENTION

The present invention relates to a device for cleaning teeth, and more particularly to a dental device for supporting a dental strip in removable manner to be used for the treatment of stains in teeth.

### BACKGROUND OF THE INVENTION

Various devices used to clean and floss teeth, particularly for cleaning and polishing the interproximal or areas between the teeth, are known in the art. Such devices typically provide a handle to support a dental floss or dental strip made from a nylon material or the like in an extended manner which can be then guided and inserted between the teeth to assist in cleaning and removing materials from there between and from the gum line.

However, such devices are poorly designed for use in deeper areas of the mouth due to their bulkiness and are poorly apt for supporting a dental strip instead of a dental floss. Furthermore, such devices are typically non-reusable since the dental floss or dental strip are permanently affixed to the device and do not allow for the replacement of used dental floss or dental strips such that the devices are therefore discarded after use. Such replacement shortcomings would be moreover compounded due to the small size of the device and the dental strip or floss which would increase the difficulty of manipulating the device in tandem with the dental floss or dental strips.

There is therefore a need for a dental strip holder that is low profiled, reusable and provides for the easy removal and attachment of a dental strip thereto.

### SUMMARY OF THE INVENTION

In accordance with one aspect of the invention, there is provided a dental strip holder for supporting a dental strip. The dental strip holder includes a handle, and a pair of prongs extending from the handle, each prong comprising one or more connectors for removably securing each end of the dental strip to the prong to support the dental strip between the pair of prongs.

In one possible embodiment of the dental strip holder, each of the pair of prongs extend from the handle parallel to one another. Each of the pair of prongs may extend from an end of the handle.

In one possible embodiment of the dental strip holder, the connector is a clip. The clip may include a movable arm rotatably hinged to the prong. The movable arm may be rotatably hinged to the prong at a distal end of the prong. The movable arm may include a projection for engaging a hole provided in the prongs. The projection may be a hook. The removable arm may further include a ball projection for engaging a socket provided in the prongs. The movable arm and the prong may each include friction enhancing surfaces for frictionally engaging the ends of the dental strip when removably secured to the prongs.

In one possible embodiment of the dental strip holder, the dental strip abuts the surface of each prong to support the dental strip planarly between the pair of prongs.

In one possible embodiment of the dental strip holder, each prong includes a first portion connected to the handle, and a second portion angularly connected to the second portion, wherein the second portion comprises the one or more connectors. The moveable arm may extend over a portion of the first portion.

In one possible embodiment of the dental strip holder, the dental strip is a flexible polyester strip. The dental strip may be a sanding strip.

In one possible embodiment of the dental strip holder, the dental strip may be used for removing stains from teeth.

Other features and advantages of the present invention will be better understood upon reading of preferred embodiments thereof with reference to the appended drawings.

### BRIEF DESCRIPTION OF THE DRAWINGS

FIG. 1 is a perspective view of a dental strip holder according to an illustrative embodiment of the present invention;
FIG. 2 is a bottom view of the dental strip holder of FIG. 1 without a dental strip;
FIG. 3 is a side view of the dental strip holder of FIG. 1;
FIG. 4A is a side view of the dental strip holder of FIG. 1 showing the connector in an unclipped state;
FIG. 4B is a side view of the dental strip holder of FIG. 1 showing the connector in a clipped state with a dental strip secured thereby;
FIG. 5 is a top view of the dental strip holder of FIG. 1 showing the connector in an unclipped state and the dental strip being received therein;
FIG. 6 is a top view of the dental strip holder of FIG. 1 showing the connector in a clipped state and the dental strip being received within a fold of the hinge of the connector;
FIG. 7 is a side view of the dental strip holder according to an alternate illustrative embodiment of the present invention;
FIG. 8 is a cross sectional side view of the dental strip holder of FIG. 3 showing a locking ball connection according to an alternate illustrative embodiment of the present invention;
FIG. 9 is a cross sectional side view of the dental strip holder of FIG. 3 showing two bosses received in recesses in accordance with an alternate illustrative embodiment of the present invention; and
FIG. 10 is a top view of the dental strip holder of FIG. 1 showing plurality of bosses and a snap fastener provided on the moveable arm, in accordance with an illustrative embodiment of the present invention;
FIG. 11 is a top view of the dental strip holder of FIG. 1 showing a clip securing the moveable arms and support prongs together in a clipped state in accordance with an illustrative embodiment of the present invention;
FIG. 12 is a perspective view of the clip of FIG. 11;
FIG. 13 is a cross sectional side view of the dental strip holder of FIG. 1 showing a screw assembly according to an alternate illustrative embodiment of the present invention; and
FIG. 14 is a top view of a dental strip including boss engaging apertures in accordance with an illustrative embodiment of the present invention.

### DESCRIPTION OF THE PREFERRED EMBODIMENTS OF THE INVENTION

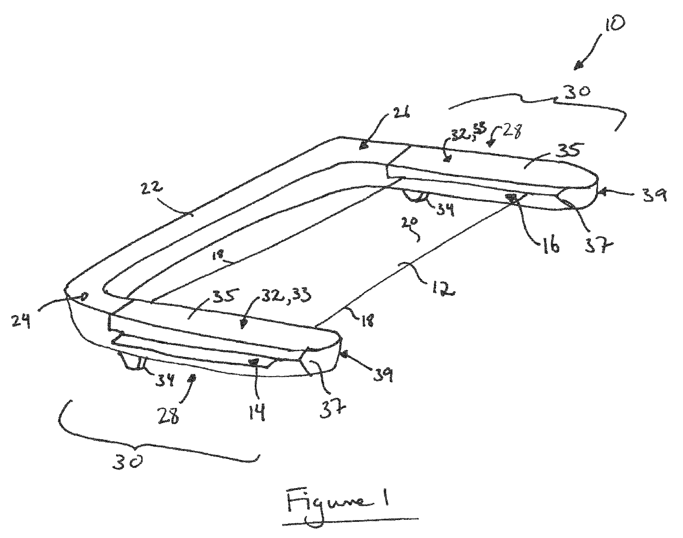

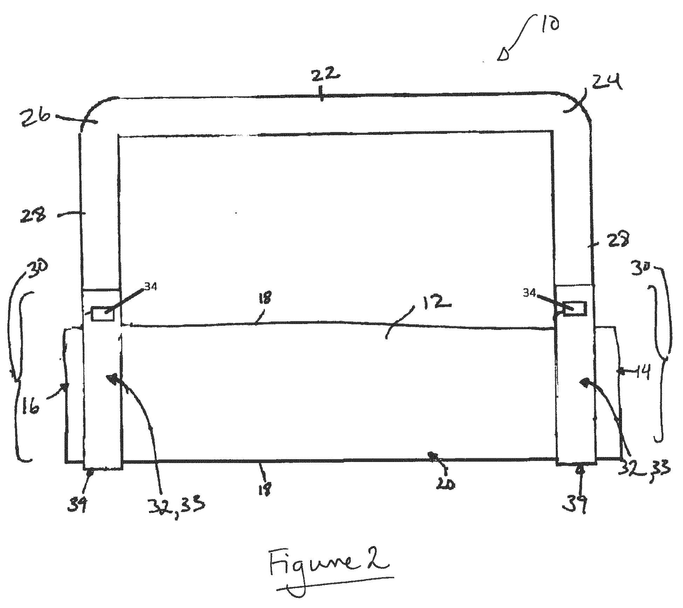

Referring now to FIG. 1 and FIG. 2, there is shown a dental strip holder according to an embodiment of the present invention generally referred to using the reference numeral 10. The dental strip holder 10 is apt at supporting a dental strip 12 in a taut and planar manner for providing a user with an enhanced control of the dental strip 12 when the dental strip 12 is inserted and manipulated between teeth. The term "taut" as applied to the dental strip holder 10 refers to the tensioned state of the dental strip 12 which is drawn tight so as to provide responsive movement of the dental strip 12 upon a movement of the dental strip holder 10. The term "planar" as applied to the dental strip holder 10 refers to the orientation of the dental strip 12 being substantially flat and within a same plane. The dental strip holder 10 is thus intended for use in a human mouth (not shown) such that the dental strip 12 may be controlled to be inserted between the teeth and manipulated there between to remove any unwanted material lodged between the teeth and around the gum line, for example by imparting a back-and-forth, sawing motion, or in a circular motion of the dental strip 12 as imparted by a similar motion of the dental strip holder 10.

In embodiments described herein below, the dental strip 12 is illustratively a thin rectangularly-shaped elongated strip of material formed from plastic, Mylar or nylon filament, or any resilient, flexible material as normally used in the art. In accordance with the illustrative embodiment, the dental strip 12 includes a first end 14, a second end 16, two parallel side edges 18, and two parallel side faces 20. One of the two parallel side faces 20 may be abrasive while smooth on another so as to operate on only one adjacent tooth when the 12 is inserted between the teeth, or the dental strip 12 may be abrasive on both sides for applications requiring an abrasive action on both of the adjacent teeth when the dental strip 12 is inserted there between. For example, the side faces 20 of the dental strip 12 may be abrasive and diamond-coated which are available in varying widths and grits as is commonly known in the art. The dental strip 12 of the present invention will be illustratively described with reference to a polyester strip with dimensions to comfortably fit between the interproximal spaces of the teeth. The dental strip 12 may illustratively have a width in the range of about 3.175 mm to about 6 mm to allow the dental strip 12 to flex during use which is useful for facilitating access to hard to reach areas normally associated with the back of the mouth for example. The average depth of dental strip 12 should be no greater than about 0.2 mm, and preferably no greater than about 0.05 mm to 0.1 mm to effectively fit between the teeth. The length of dental strip 12 may be in the order of 40 mm for example. One skilled in the art will however understand that the present invention could equally be used with a dental strip 12 of different materials and dimensions. Optionally, the dental strip holder 10 could also be used with dental floss, for example in a manner as described herein below.

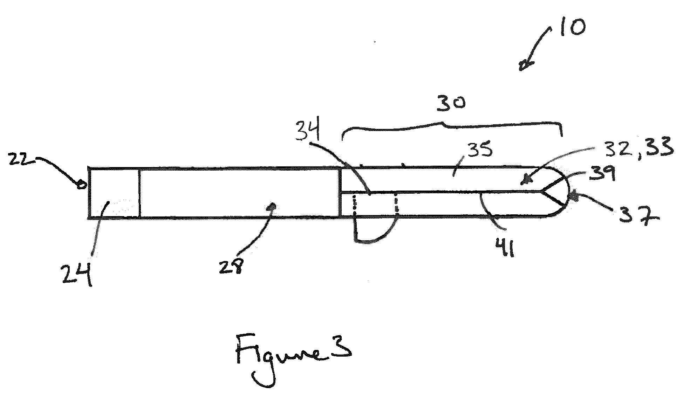

Still referring to FIG. 1 and FIG. 2, in addition to FIG. 3, the dental strip holder 10 includes a support handle 22 which extends generally along a longitudinal axis between a first handle end 24 and a second handle end 26. The support handle 22 may be of any configuration so as to fit between the fingers of a user, for example between the thumb and the index finger, for translating a motion of the fingers to the support handle 22. For example, the support handle 22 include a length of approximately 5 cm so as to be comfortably gripped by a user for use of the dental strip holder 10 on the front teeth. Although a longer support handle 22 can hold a longer strip 12, other lengths and dimensions of the support handle 22 can be provided. For example, the support handle 12 may be shortened to 3 cm to make it more maneuverable within a mouth including around posterior teeth. It is however understood that other type or configuration of the support handle 22 can be employed instead of the handle as illustrated in FIG. 1, which may include a support handle 22 having a rounded and contoured profile so as to provide a supporting surface for the user's grasp as required for a particular application or according to a user's preference. Optionally, the handle 22 may include a telescopic configuration which can retract or increase in length and snaps into position when either retracted, or lengthened, If retracted, the dental strip holder 10 is easier to manipulate around posterior teeth. If elongated, the dental strip holder 10 is still easy to use in the front teeth but can use longer dental strips 12 which in turn require less back in forth motions to remove stains.

Still referring to FIG. 1, FIG. 2, and FIG. 3, extending from the first handle end 24 and a second handle end 26 is a pair of support prongs 28 extending from the support handle 22 in a generally perpendicular and parallel manner so as to form a plane defined between the support handle 22 and the support prongs 28. While the angle at which the support prongs 28 extend away from the support handle 22 is illustrated as being perpendicular thereto, other angles may be provided for obtaining an adequate clearance of the support handle 22 from the teeth during use whereby the support handle 22 may be moved in a back-and-forth, sawing motion, or circular motion by the user's fingers without the support handle 22 or the support prongs 28 entering into contact with the teeth. The support prongs 28 may be a monolithic element or embodied by a plurality of components assembled together with the support handle 22, but other configurations may be provided. For example the support prongs 28 may be removably attached to the support handle 22. As illustrated in the Figures, the support prongs 28 and the support handle 22 are a monolithic element which may be illustratively formed in a mould or similar manufacturing process.

Of note, while the support handle 22 and pair of support prongs 28 have been illustrated herein as having a square cross-sectional shape, alternatively they may include rounded, squared, triangular or flattened or other types of shapes. Additionally, support handle 22 and pair of support prongs 28 may be made of any suitable material, including but not limited to plastic, nylon, or metal.

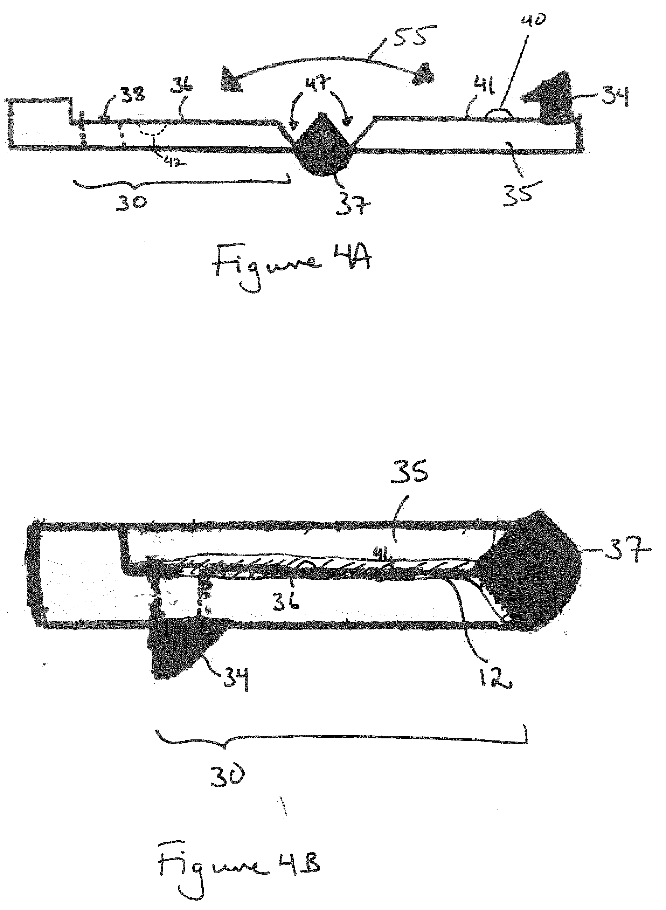

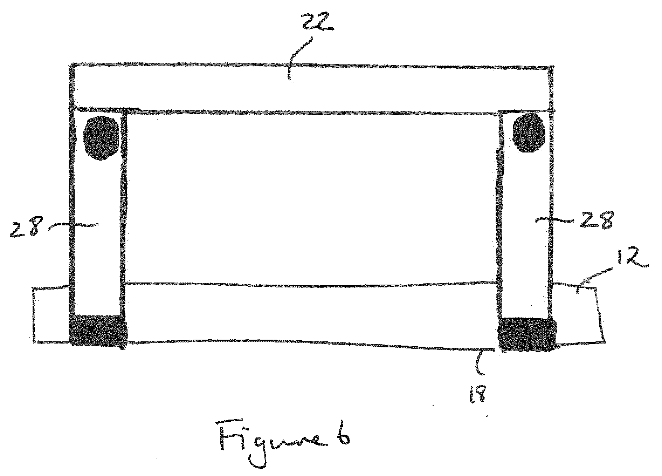

Now referring to FIGs. 4, 5, and 6, in addition to referring to FIG. 1 and FIG. 2, each of the support prongs 28 includes a connecting portion 30 including one or more connectors 32 configured to connect to and secure the dental strip 12 between the support prongs 28 in a taut and planar manner for example, and in an orientation such that two parallel side faces 20 of the dental strip 12 are parallel to the support prongs 28 so as to position one of the two parallel side edges 18 away from the support handle 22 to facilitate insertion of the dental strip 12 between two adjacent teeth. The one or more connectors 32 are illustratively clips 33 including a movable arm 35 in a hinged connection via a hinge 37 provided at the support prong distal end 39 in the form of a bent or folded area 47 of material between the support prong 28 and the movable arm 35. Optionally, the movable arm 35 may be completely separated from the support prongs 28 and removably secured thereto. Illustratively, the dental strip 12 may be positioned within this folded area 47 so as to position the dental as close as possible to the support prong distal end 39. In such a configuration, the dental strip 12 will include a slight bend of one of the side edges 18 so as to form an angled edge which may also act on the naturally sloping area near the base of the tooth and the gum line. Optionally, a dental floss may be secured between the support prongs 28 by the one or more connectors 32. For example, a dental floss may be looped around the support prongs 28 to be secured thereto, or the dental floss may be secured to the support prongs 28 via the connectors 32, in a similar manner that the dental strip 12 is secured.

Still referring to FIGs. 1, 2, 4, and 5 the support prongs 28 include support surfaces 36 which are illustratively recessed along the length of the connecting portion 30 so as to receive the movable arm 35 to form a uniformly profiled support prong 28 along its length. The support surface 36 and the movable arm 35 may be of any appropriate shape and size, such as a generally rectangular shape and approximately a length greater than the length of a dental strip 12 to be retained by the connector 32. Of note, while the hinge 37 has been located at a support prong distal end 39, the hinge 37 may be located at any appropriate position on the support prong 28, such to provide a connector 32 capable of receiving the dental strip 12.

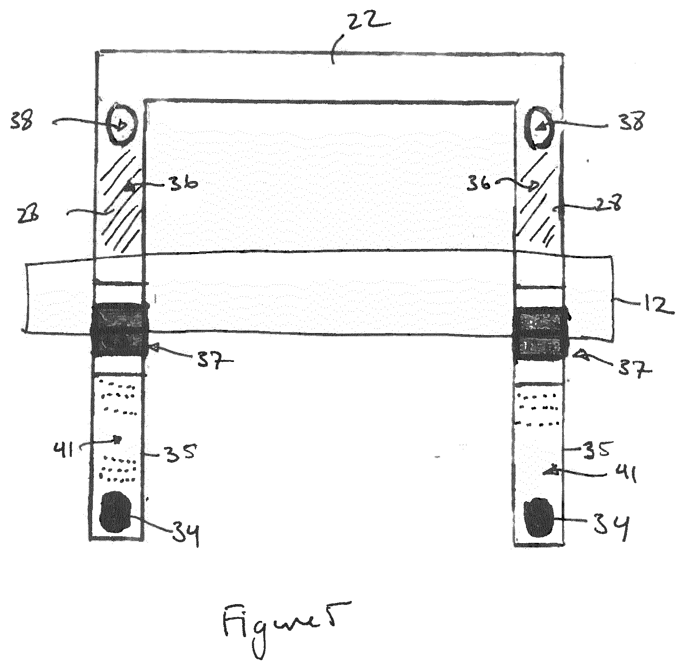

Now referring to FIGs. 4A, 4B and 5 in addition to FIG. 1, the movable arm 35 illustratively includes hook 34 or protrusions at a position distal from the hinge 37 which protrude from an arm surface 41 and are configured to engage holes 38 formed in the support prongs 28, for example in the support surfaces 36, when the movable arm 35 is rotated about the hinge 37 towards the support surface 36. Optionally, the hooks 34 may be shaped like barbs for engaging the holes 38 and for being retained therein in a locking engagement. As shown in FIG. 1, the dental strip 12 is illustratively supported against the support surfaces 36 and the arm surfaces 41 of each support prong 28 so that the surface of one of the two parallel side faces 20 is maintained between the support surfaces 36 and the arm surfaces 41 within a plane defined between the support prongs 28 and the support handle 22 when the hooks 34 of the movable arm 35 engage the holes 38.

Still referring to FIG. 1 and FIG. 2, the dental strip 12 is removably secured to the support prongs 28 by rotating the movable arm 35 away from the support prongs 28 about the hinge 37 as generally represented by arrows 55, which exposes the support surfaces 36 to allow for the dental strip 12 to be positioned thereupon. Once the dental strip 12 is positioned upon the support surface 36, the movable arm 35 is rotated about the hinge 37 back towards the support surface 36 such that the hooks 34 engage the holes 38 thereby frictionally securing the dental strip 12 between the support surface 36 and the arm 35. Optionally, the support surface 36 and the arm surface 41 may be provided with bosses or grips so as to frictionally enhance the engagement with the two parallel side faces 20 of the dental strip 12. The expression "removably secured" or "removably secure" thus refers to the ability of the dental strip 12 to be connected to the support prongs 28 by the connector 32, for example by the clipping action of the clip 33 as illustrated. The expression also refers to the ability of the dental strip 12 to be relatively easily removed from the support prongs 28 during a similar unclipping action of clip 33 when desired, which illustratively involves the deformation of the boss 34 to disengage it from the hole 38, to allow the movable arm 35 to be rotated about the hinge 37 away from the support surface 36. When the dental strip 12 is secured by the connector 32 the dental strip 12 is tautly extended between support prongs 28 such that the one of the two parallel side faces 20 will be illustratively the held against the working support surfaces 36 so as to maintain the dental strip 12 in a planar orientation relative to the plane defined between the support prongs 28 and the support handle 22. Of note, while the present invention is illustrated herein with reference to a removably secured dental strip 12, a dental floss may also be removably secured between the support prongs 28, for example by looping a portion of the dental floss around the support prongs 28, or around the moveable arms 35 such that when the moveable arms 35 are secured to the support prongs 28 the dental floss is engaged against the support surface 36 and the arm surface 41. As a result, the dental strip holder may be employed as a dual use dental tool which is able to accommodate dental strips and dental floss which can be easily removed and replaced from the dental strip holder 12 once the dental strip or dental floss have been used. The one or more connectors 32 thus allow for dental strips or dental floss of minimum length to be used with the dental strip holder 12 which can assist in reduce waste.

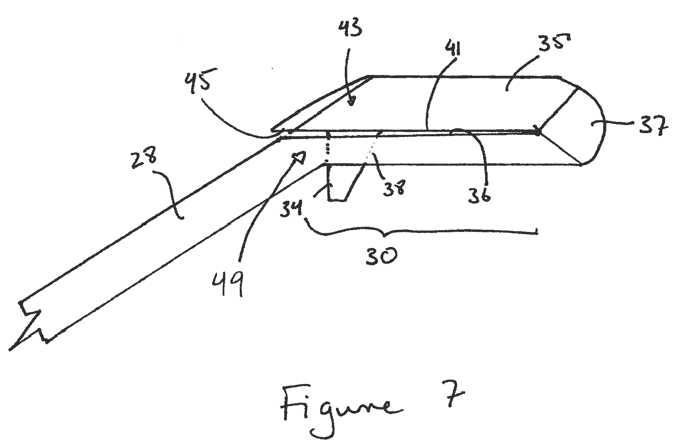

Now referring to FIG. 7, in accordance with an alternate embodiment of the present invention, the support prong 28 includes an angled bend 49 such that the distal end 43 of the movable arm 35 slightly extends from the support prong 28 so as to create a lip 45 which can assist in the unlocking of the movable arm 35 from the supporting prong 28 by a user's nail or finger for example.

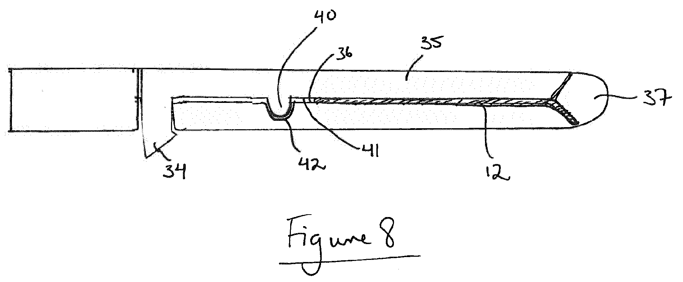

Now referring to FIG. 8 in addition to FIG. 4A, in accordance with an alternate embodiment of the present invention, the movable arm 35 includes a ball 40 projecting from the arm surface 41. The ball 40 may be a projection formed integrally with the movable arm 35, or may be a distinct ball structure fitted within a socket provided within the moveable arm 35. The ball 40 may be configured to engage a corresponding socket 42 provided on the connecting portion 30 such that upon rotation of the movable arm 35 towards the support prongs 28 about the hinge 37 as generally represented by arrows 55, the projecting ball 40 is press fitted into the socket 42 and maintained therein by friction so as to further secure the movable arm 35 to the connecting portion 30 and thus secure the dental strip 12 against the working support surfaces 36 as previously described hereinabove. When the movable arm 35 is rotated about the hinge 37 away from the support surface 36 the ball 40 is urged to disengage from the socket 42. The ball 40 has the purpose of securing moveable arm 35 and support prongs 28 even more securely and also to prevent any movement of the dental strip 12 moving up and down the support prong 28 between the support surface 36 and the arm surface 41. Of note, while the socket 42 has been illustrated herein as being fully contained within the support prongs 28, the socket 42 may form a through passage in the support prongs 28 such that a portion of the ball 40 extends through the support prong 28. Additionally, more than one ball 40 and socket 42 pair may be provided, or any number of ball 40 and socket 42 pairs may not be provided. Optionally, the ball 40 and socket 42 pair may be configured as a snap fastener assembly including a male half having a groove provided on the moveable arm 35 which snaps in place when pressed into the female half provided on the arm surface 41 for example. The snap fastener may also be in addition to the ball 40 and socket 42 pair and be of a configuration as is generally known in the art, for example, a snap having a male half which "snaps" in place when "pressed" into the female half,

Of note while the hooks 34 and ball 40 have been illustrated herein as projecting from the arm surface 41, the hooks 34 and ball 40 may also be configured to project from the working support surfaces 36 or be otherwise positioned so as to removably secure the movable arm 35 and the prong 28 together.

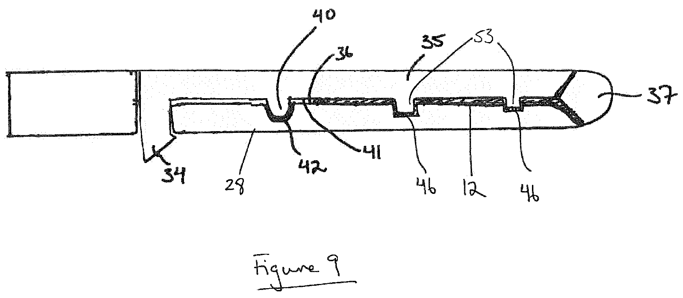

Now referring to FIG. 9 in addition to FIG. 4A and FIG. 9, in accordance with an optional embodiment of the present invention, bosses 53 or protrusions may be provided which protrude from an arm surface 41 and are configured to be received by recesses 46 formed in the support prongs 28, for example in the support surfaces 36, when the movable arm 35 is rotated about the hinge 37 towards the support surface 36. Illustratively, two additional bosses 53 are shown, but one or more maybe employed having different positions and sizes. For example, the bosses 53 may be shaped as zig-zags which mate with corresponding zig-zag shaped grooves. In one embodiment, bosses 53 shaped as zig-zags may be provided on both the arm surface 41 and the support surface 36 so as to mate when brought together. The bosses 53 are rectangularly shaped for being received within similarly shaped recessed 46. Alternatively, the bosses 53 may be rounded, squared, triangular or flattened or other type of shape. As shown in FIG. 9, the dental strip 12 is illustratively supported against the support surfaces 36 and the arm surfaces 41 of each support prong 28, in addition to being pinched between the bosses 53 and the recesses 46 so that the surface of one of the two parallel side faces 20 is maintained between the support surfaces 36 and the arm surfaces 41 within a plane defined between the support prongs 28 and the support handle 22. The pinching action of the bosses 53 and recesses 46 on the dental strip 12 further enhances the support of the dental strip 12 between the support prongs 28. Optionally, the bosses 53 may be provided with a 90 degree corner for increased friction to pinch dental strip 12. Of note, while additional bosses 53 or protrusions may be provided which protrude from an arm surface 41, in accordance with an illustrative embodiment, no bosses 53 may be provided on each arm surface 41.

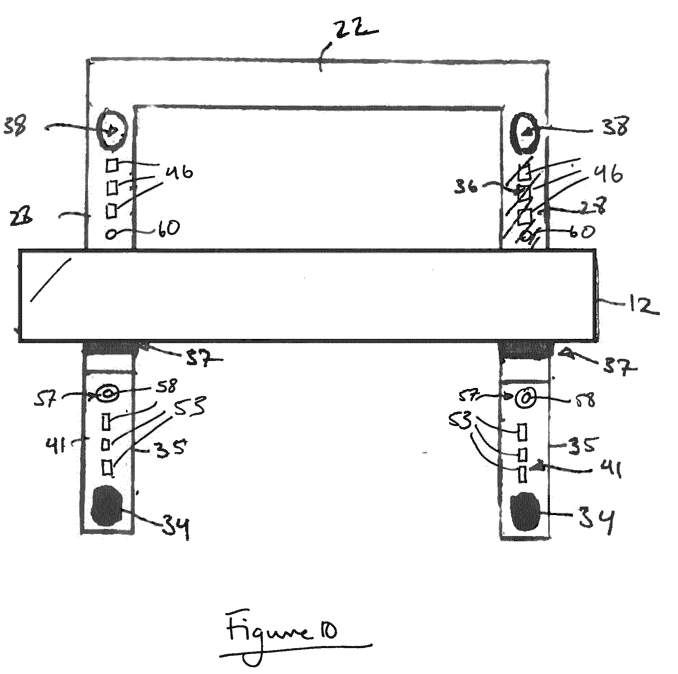

Now referring to FIG. 10, there is illustratively shown a dental strip holder 10 with a plurality of bosses 53 provided on each arm surface 41. In particular, there is illustrated one hook 34, an additional bosses 53 provided on each arm surface 41 for mating with recesses 46 formed in the support prongs 28, as well as a snap fastener 57 including a male half 58 having a groove provided on the moveable arm 35 which snaps in place when pressed into the female half 60 provided on the support prongs 28. Of note, other combinations may be provided, for example the dental strip holder 10 may be provided with only snap fasteners 57, or only with additional bosses 53 and a ball 40 and socket 42 pair.

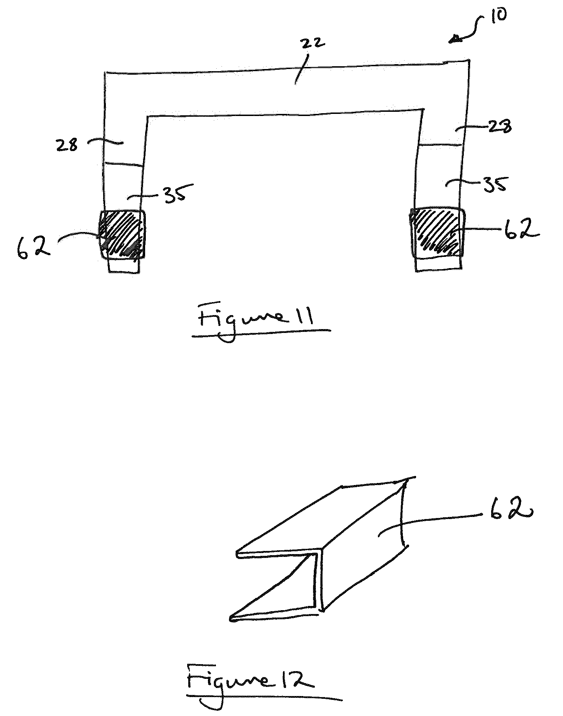

Now referring to FIG. 11 and FIG 12, in accordance with an alternate embodiment of the present invention, the dental strip holder 10 may include a clip 62 configured for engaging the moveable arms 35 and the support prongs 28 together with or without the provision of a hook 34 in the embodiment shown in FIG. 4A and 4B. Illustratively, the clip 62 is a U-shaped resilient member configured to slidabley engage the moveable arms 35 and support prongs 28 to secure them together. In such a case, the use of a hook 34 may not be required, or may be used in combination with the clip 62 to enhance the retaining forces between the moveable arms 35 and support prongs 28 when a dental strip 12 is maintained therebetween as described herein above.

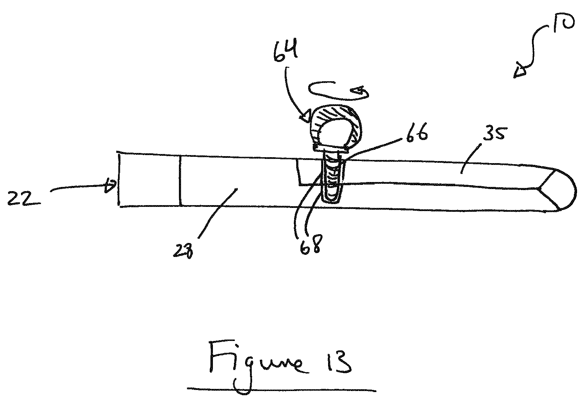

Now referring to FIG. 13, in accordance with an alternate embodiment of the present invention, the dental strip holder 10 includes a screw assembly 64 including a screw 66 engagable with screw holes 68 provided in the moveable arms 35 and support prongs 28 such that when the moveable arms 35 and support prongs 28 are brought together, the screw 66 is apt at tightening within the screw holes 68 to urge the moveable arms 35 and support prongs 28 together, or vice-versa to urge the moveable arms 35 and support prongs 28 apart to disengage the moveable arms 35 and support prongs 28 from one another. Optionally, the screw 66 can be made of plastic, nylon, or metal.

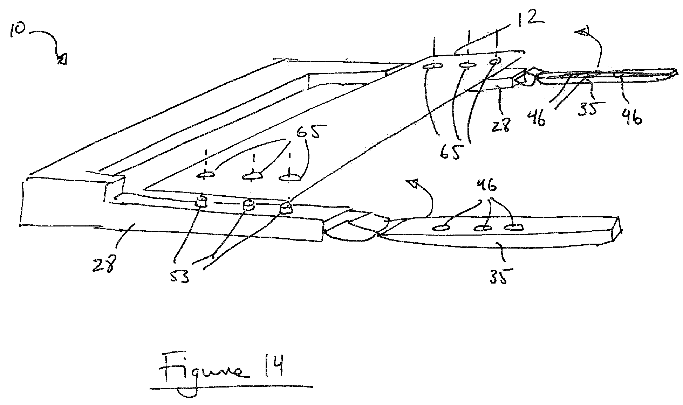

Now referring to FIG. 14, in accordance with an alternate embodiment of the present invention, the dental strip 12 is provided with apertures 65 designed to allow bosses 53 to pass there though when the moveable arms 35 and support prongs 28 are brought together.

As a result of the above configuration, the dental strip 12 may be rapidly added to or removed from the support handle 22. Thus, a user may quickly replace a used dental strip 12 with a new dental strip 12 or interchange between a dental strip 12 provided with a shining surface to one provided with a polishing surface. By supporting the two parallel side faces 20 of the dental strip 12 with respect to the plane of the holder 10 defined between the support prongs 28 and the support handle 22, the user can control the dental strip 12 in various areas of and at different positions within the mouth to place the dental strip 12 into proper position with respect to the teeth, particularly between posterior teeth. The dental strip 12 thus enters into contact with the interproximal surfaces of the teeth during the manipulation of the handle in various motions imparted by the fingers of the user. In use, the user holds the support handle 22 of the dental strip holder 10 firmly between the fingers, for example by placing the thumb and middle finger between the support handle 22. This finger positioning causes the dental strip holder 10 to react to controlled hand and finger pressure applied in a direction perpendicular or parallel to the longitudinal axis of the support handle 22, or any combination thereof. When the dental strip 12 is in contact with a tooth, the user forces the shining or polishing surfaces of the parallel side faces 20 of the dental strip12 member against the desired portion of the tooth to remove debris, or for shining and polishing.

Of course, numerous modifications could be made to the embodiments above without departing from the scope of the invention as defined in the appended claims.

## Claims

1. A dental strip holder for supporting a dental strip, the dental strip holder comprising:
a handle; and
a pair of prongs extending from the handle, each prong comprising one or more connectors for removably securing each end of the dental strip to the prong to support the dental strip between the pair of prongs.

2. The dental strip holder of claim 1, wherein each of the pair of prongs extend from the handle parallel to one another.

3. The dental strip holder of claim 1 or 2, wherein each of the pair of prongs extend from an end of the handle.

4. The dental strip holder of any one of claims 1 to 3, wherein the connector is a clip.

5. The dental strip holder of any one of claims 1 to 5, wherein the clip comprises a movable arm rotatably hinged to the prong.

6. The dental strip holder of claim 5, wherein the movable arm is rotatably hinged to the prong at a distal end of the prong.

7. The dental strip holder of any one of claims 5 or 6, wherein each of the movable arm comprises a projection for engaging a hole provided in the prongs.

8. The dental strip holder of claim 7, wherein the projection is a hook.

9. The dental strip holder of any one of claim 5 to 8, wherein the removable arm further comprises a ball projection for engaging a socket provided in the prongs,

10. The dental strip holder of any one of claims 5 to 9, wherein the movable arm and the prong each comprise friction enhancing surfaces for frictionally engaging the ends of the dental strip when removably secured to the prongs.

11. The dental strip holder of any one of claims 1 to 10, wherein the dental strip abuts the surface of each prong to support the dental strip planarly between the pair of prongs.

12. The dental strip holder of any one of claims 5 to 11, wherein each prong comprises a first portion connected to the handle, and a second portion angularly connected to the second portion, wherein the second portion comprises the one or more connectors.

13. The dental strip holder of claim 12, wherein the movable arm extends over a portion of the first portion.

14. The dental strip holder of any one of claims 1 to 12, wherein the dental strip is a flexible polyester strip.

15. The dental strip holder of claims 1 to 13, wherein the dental strip is a sanding strip.
